## Europäisches Patentamt
## European Patent Office
## Office européen des brevets

(11) Veröffentlichungsnummer: **0 004 663**
**B1**

(12) **EUROPÄISCHE PATENTSCHRIFT**

(45) Veröffentlichungstag der Patentschrift: **03.06.81**

(51) Int. Cl.³: **F 16 N 3/12**

(21) Anmeldenummer: **79101009.3**

(22) Anmeldetag: **03.04.79**

(54) Fettpresse.

(30) Priorität: **12.04.78 DE 2815699**

(43) Veröffentlichungstag der Anmeldung:
**17.10.79 Patentblatt 79/21**

(45) Bekanntmachung des Hinweises auf die Patenterteilung:
**03.06.81 Patentblatt 81/22**

(84) Benannte Vertragsstaaten:
**BE CH FR GB IT LU NL SE**

(56) Entgegenhaltungen:
**FR - A - 20 624 22**
**US - A - 16 191 26**
**US - A - 35 010 63**
**US - A - 40 774 93**

(73) Patentinhaber: **Jakob Pressl Söhne**
**Knebelstrasse 1-3**
**D-8500 Nürnberg (DE)**

(72) Erfinder: **Pressl, Klaus A.**
**Burgstallstrasse 60**
**D-8501 Obermichelbach (DE)**

(74) Vertreter: **Böhme, Volker, Dr. et al,**
**Patentanwälte Dr. Böhme, Kessel, Böhme**
**Frauentorgraben 73**
**D-8500 Nürnberg (DE)**

Courier Press, Leamington Spa, England.

## Fettpresse

Die Erfindung betrifft eine Fettpresse mit einem Behälterrohr, an dessen einem Ende ein Aufsatz mit Pumpe sitzt und an dessen anderem Ende ein in Achsrichtung verschiebbarer, einen äußeren Führungsring aufweisender Innendeckel eingesetzt ist, an dem eine Zugstange axial verschiebbar und mittels Feststelleinrichtung feststellbar geführt ist, die im Behälterrhor eine auf ihr verschiebbare Druckmanschette, zwischen dieser und dem Innendeckel eine Druckfeder und außerhalb des Behälterrohres ein Griffstück trägt.

Eine solche Fettpresse ist aus der US - A - 4077493 bekannt.

Bei einer durch die Praxis bekannten Fettpresse dieser Art ist das Griffstück von der Zugstange abschraubbar und ist das Behälterrohr vom Aufsatz abschraubbar, so daß der Innendeckel, die Zugstange, die Druckmanschette und die Druckfeder durch das aufsatzseitige Ende des Behälterrohres aus diesem heraus und in dieses hineingebracht werden können. Der innen am Behälterrohr anliegende Führungsring ist in Achsrichtung relativ breit, zumindest 10 mm breit, so daß der Innendeckel nur relativ schwer im Behälterrohr zu verschieben ist, besonders wenn die Zugstange etwas quergestellt wird oder nicht genau koaxial belastet wird. Als Feststelleinrichtung sind eine schlüssellochartige Ausbildung des Führungsloches im Innendeckel und eine Ringnut an der Zugstange nahe der Druckmanschette vorgesehen. Wegen der großen Breite des Führungsringes und der Schrägstellung der Zugstange läßt sich der Innendeckel bei eingehakter Zugstange im Behälterrohr nur schwer verschieben.

Somit läßt sich die Zugstange nur im voll ausgezogenen Zustand bei hochkomprimierter Druckfeder in einer von der Mittelachse abweichenden Schräglage festellen. Wenn in das Behälterrohr eine Fett enthaltende Kartusche eingesetzt ist, in deren eines offenes Ende die Druckmanschette einzuführen ist, dann macht das Einführen mehr oder weniger große Schwierigkeiten, sobald der Endrand der Kartusche verdrückt, eingerissen oder verbogen ist. Insbesondere aber läßt sich Luft aus angesaugtem Fett in dem Behälterrohr oft aufgrund des Druckes der Druckfeder allein nicht ausreichend aus dem Fett entfernen, so daß beim Fettpressen häufig statt reinen Fettes teilweise Luft austritt, was häufig beim Fetten nicht bemerkt wird.

Es ist bereits bekannt (US - A - 16 19 126), bei einer Fettpresse am aufsatzseitigen Ende des Behälterrohres eine verschließbare enge Luftauslaßöffnung vorzusehen. Allerdings sind dann, wenn eine solche Luftauslaßöffnung bei der eingangs erörterten bekannten Fettpresse vorgesehen wird, die vorher geschilderten Nachteile der eingangs erörterten bekannten Fettpresse nicht beseitigt.

Eine Aufgabe der Erfindung ist es somit, eine Fettpresse der anfangs genannten Art zu schaffen, bei der sich etwaige im Fett befindliche Luft bewußt von Hand aus dem Fett und aus dem Behälterrohr herausdrücken läßt, ohne hierzu den Aufbau der Fettpresse allzu sehr zu komplizieren, und zwar unabhängig von der jeweils gerade im Behälterrohr befindlichen Fettmenge. Die erfindungsgemäße Fettpresse ist hierzu dadurch gekennzeichnet, daß am aufsatzseitigen Ende des Behälterrohres eine verschließbare enge Luftauslaßöffnung vorgesehen ist und die Feststelleinrichtung als Klemmeinrichtung mit über eine Betätigungslasche bedienbarem, mit der Zugstange zusammenwirkenden Klemmstück ausgebildet ist.

Durch die Kombination dieser beiden Merkmale ist es möglich, die ausgezogene Zugstange genau im Achsrichtung festzustellen und durch Druck auf die Zugstange die Druckmanschette gegen das Fett zu drücken, so daß im Fett befindliche Luft durch die Luftauslaßöffnung entweichen kann. Es ist zwar durch die Praxis bekannt, bei einer Fettpresse die Feststelleinrichtung als Klemmeinrichtung auszubilden, wobei aber der Innendeckel feststeht, d.h. nicht axial verschiebbar ist; insbesondere ist hier auch nicht daran gedacht, durch Eindrücken des Innendeckels in das Behälterrohr Luft aus dem Fett herauszupressen. Wegen der Verschließbarkeit hat die Luftauslaßöffnung jedoch beim Fettpressen selbst keine Wirkung.

Unter einer engen Luftauslaßöffnung wird eine Öffnung verstanden, deren Querschnitt möglichst kleiner als der der Fettauslaßöffnung ist, damit beim Luftauspressen möglichst wenig Fett durch die Luftauslaßöffnung austritt. Die einfachste Art, die Luftauslaßöffnung zu bilden, ist, das Behälterrohr nicht voll in den Aufsatz zu schrauben, so daß die Luft durch einen Spalt zwischen Behälterrohr und Aufsatz entweichen kann, wobei der Spalt durch volles und abschließendes Einschrauben geschlossen wird.

Bei einer Fettpresse, bei welcher das Behälterrohr in den Aufsatz gegen einen Dichtungsring geschraubt ist, ist es besonders zweckmäßig und vorteilhaft, wenn in dem Gewinde eine in Achsrichtung verlaufende Nut vorgesehen ist. Hier ist mit einfachen Mitteln eine gut funktionierende Luftauslaßöffnung geschaffen, die bei leicht bzw. geringfügig losgeschraubtem Behälterrohr offen und durch Anziehen des Behälterrohres mittels des Dichtungsringes geschlossen ist.

Besonders zweckmäßig und vorteilhaft ist es auch, wenn die Betätigungslasche der Klemmeinrichtung in radialer Richtung innerhalb des Umfanges der Öffnung des Behälterrohres liegt und in Achsrichtung umgebogen ist.

Bei dieser Ausbildung läßt sich die Betätigungslasche zusammen mit dem Innendeckel ohne weiteres in das Behälterrohr hineinschieben, wobei die Betätigungslasche einfach und doch gut zu bedienen ist.

Besonders zweckmäßig und vorteilhaft ist es auch, wenn die Breite des Führungsringes verringert ist, indem das Verhältnis Außendurchmesser des Innendeckels zu Breite des Führungsringes von 6,5 bis 8,5, insbesondere von 7 bis 8 und dabei vorzugsweise ca. 7,4 beträgt. Die Breite ist dabei so eingestellt, daß die Führungsfunktion gerade gewährleistet ist aber jede Schwergängigkeit und Verhakung des Innendeckels beim Verschieben im Behälterrohr vermieden ist. Die Breite des Führungsringes beträgt z.B. vorzugsweise weniger als 10 mm, z.B. etwa 7 mm.

Wenn der Innendeckel aus dem Behälterrohr herausgewölbt ist, ist es besonders zweckmäßig und vorteilhaft, wenn in den Innendeckel innerhalb des Führungsringes eine Scheibe eingelegt ist, an der die Druckfeder angreift. Diese eingelegte Scheibe verhindert eine unsymmetrische Belastung des Innendeckels durch die Druckfeder und somit ein Verkanten des Innendeckels, was wegen der Verschiebbarkeit des Innendeckels in dem Behälterrohr unerwünscht ist und insbesondere bei verkürztem Führungsring gegebenenfalls leicht auftreten kann.

Besonders zweckmäßig und verteilhaft ist es noch, wenn die Druckfeder in an sich bekannter Weise eine sich vom Innendeckel zur Druckmanschette konisch verjüngende Wendel ist. Diese konische Gestaltung der Druckfeder-Wendel erleichtert die axiale Verschiebung der komprimierten Druckfeder im Behälterrohr und läßt auch eine vereinfachte Führung bzw. Justierung des Federendes an der Druckmanschette zu; durch den geringen Durchmesser des an der Druckmanschette anliegenden Federendes werden Verkantungen der Druckmanschette vermieden.

Besonders zweckmäßig und vorteilhaft is es weiterhin, wenn die Druckmanschette zum Innendeckel hin einen die Zugstange eng umschließenden Ansatz bildet. Dieser Ansatz trägt wesentlich zur Vermeidung von Verkantungen der Druckmanschette im Behälterrohr bei. Auch hat die wendelförmige Druckfeder gegenüber dem Ansatz in radialer richtung weniger Spiel als gegenüber der Zugstange, was gerade bei konischer Gestaltung der Druckfeder zur Vermeidung von Verkantungen der Druckmanschette beträgt.

Wenn eine die Anlage der Druckfeder bildende Scheibe an der Druckmanschette anliegt, ist es dabei besonders zweckmäßig und vorteilhaft, wenn diese Scheibe einen den Ansatz umschließenden Hals bildet. Dieser Hals stabilisiert die Manschette und verbessert die Halterung und Führung der Druckfeder.

Die Gestaltung einer erfindungsgemäßen Fettpresse ist bei Verwendung einer Fettkartusche von Vorteil, insbesondere wenn deren freier Endrand von der exakten kreisrunden Gestaltung abweicht. Die Zugstange wird dann herausgezogen und festgeklemmt. Nun läßt sich die Druckmanschette kreisförmig hin- und herbewegen, da der Innendeckel sich ähnlich wie ein Kugelgelenk etwas drehen läßt. Wegen der Kürze des Führungsringes des Innendeckels ist dessen Drehbeweglichkeit stark verbessert. Auch sitzt die Druckmanschette in verbesserter Weise geführt an der Zugstange, wodurch das Einführen der Manschette in die Kartusche durch Kreisenlassen der Manschette bzw. Herumtasten mit dem Manschette erleichtert ist.

Es ist vorzugsweise eine Gestaltung vorgesehen, die ein Einführen der Manschette auch in eine Kartusche ermöglicht. Diese Gestaltung umfaßt eine elastische Zusammendrückbarkeit der Manschette in radialer Richtung. Weiterhin ist die Druckmanschette außen zum Aufsatz hin sich konisch verjüngend ausgebildet. Es ist aber auch möglich, das Behälterrohr nahe dem Aufsatz mit einer Einschnürung zu versehen, in welcher die Manschette in radialer Richtung komprimiert wird, um in die Kartusche eingeschoben werden zu können.

Eine erfindungsgemäße Fettpresse ist dann, wenn sich während des Betriebes die Druckmanschette im Behälterrohr verklemmen sollte, so daß beim Pressen Luft statt Fett austritt, von Vorteil. Es läßt sich nämlich dann die Zugstange etwas herausziehen und festklemmen und dann samt dem Innendeckel hineindrücken, wodurch wegen der verstärkt komprimierten Druckfeder zwischen dem Innendeckel und der Manschette auch letztere weiterbewegt wird. Wenn also der normale Druck der Druckfeder auf die Druckmanschette nicht ausreicht, um die Manschette im Behälterrohr vorwärts zu schieben, dann kann dieser durch Vorschieben des Innendeckels und Verstärkte Komprimierung der Druckfeder erhöht werden.

Die Montage und Demontage der am Behälterrohr angebrachten Teile läßt sich vereinfachen, wenn die Breite des Griffstükkes in radialer Richtung innerhalb des Umfanges der Öffnung des Behälterrohres liegt. Manschette, Zugstange, Druckfeder, Innendeckel und Griffstück lassen sich als Einheit aus dem Behälterrohr herausnehmen und wieder in dieses einsetzen.

In der Zeichnung ist eine bevorzugte Ausführungsform der Erfindung dargestellt und zeigt

Fig. 1 einen Längsschnitt einer Fettpresse,

Fig. 2 einen Schnitt gemäß Linie II—II in Fig. 1,

Fig. 3 einen Längsschnitt durch die Manschette der Fettpresse gemäß Fig. 1 und

Fig. 4 einen Längsschnitt durch eine weitere Manschette für die Fettpresse gemäß Fig. 1.

Eine Fettpresse gemäß Zeichnung besitzt ein zylindrisches Behälterrohr 1, das oben ein Außengewinde 2 aufweist, auf das ein Aufsatz 3 geschraubt ist, der eine Pumpe 4 trägt. Das Außengewinde ist ein gerolltes Rundgewinde, das für die Entlüftung von Vorteil ist, weil es gröber ist und schon durch eine Vierteldrehung die ausreichende Öffnung des Entlüftungsschlitzes bewirkt. Das Behälterrohr weist unten eine geringe Einziehung 5 auf, so daß der Querschnitt der unteren Öffnung kleiner ist als der übrige Querschnitt des Behälterrohres. Am Aufsatz 3 ist zugehörig zu der Pumpe 4 eine Fettauslaßöffnung 6 vorgesehen. Das Behälterrohr 1 ist in dem Aufsatz 3 gegen einen Dichtungsring 7 geschraubt. Das Innengewinde des Aufsatzes 3 ist entlang einer in Achsrichtung verlaufenden Nut 8 entfernt, so daß bei nicht voll eingeschraubtem Behälterrohr 1 aus diesem Luft durch die Nut nach außen entweichen kann.

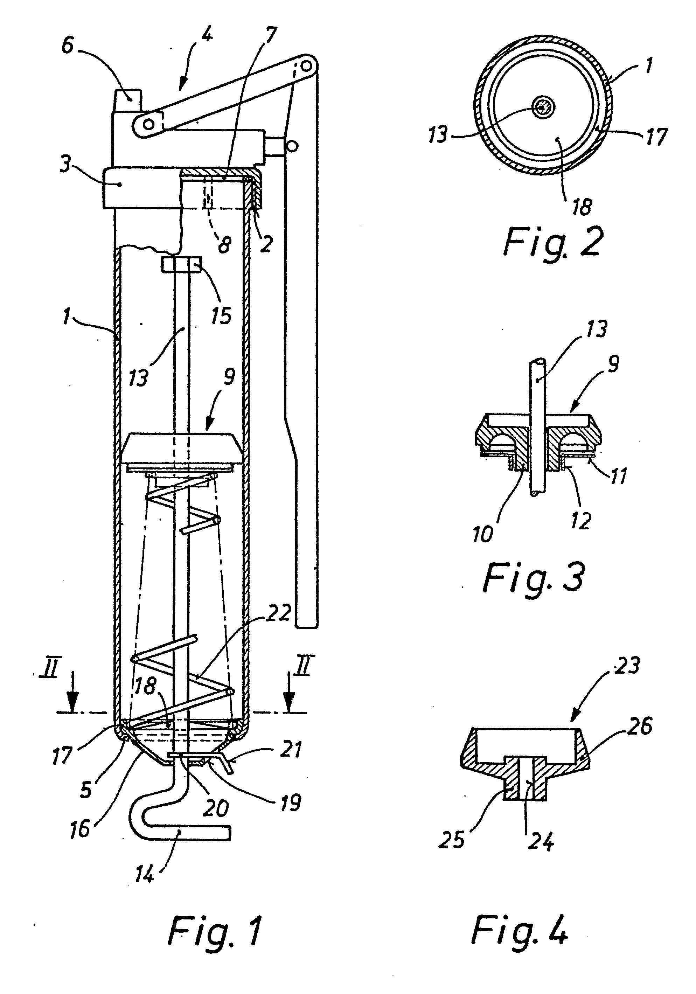

In dem Behälterrohr 1 ist eine Manschette 9 aus Gummi axial verschiebbar vorgesehen, deren äußere Gestaltung sich zum Aufsatz 3 hin konisch verjüngt. Die Manschette ist aufgrund ihres Materials und ihrer an sich bekannten, aus Fig. 3 ersichtlichen Gestaltung in radialer Richtung etwas elastisch komprimierbar. Sie bildet zu der Einziehung 5 hin einen halsartigen Ansatz 10. Den Ansatz umschließt eine metallene Scheibe 11, die einen den Ansatz ringartig umfassenden Hals 12 aufweist. Die Manschette 9 ist mid der Scheibe 11 auf einer entlang dem Behälterrohr 1 verlaufenden Zugstange 13 verschiebbar, die bei der Einziehung 5 aus dem Behälterrohr 1 ragt und außerhalb desselben ein Griffstück 14 trägt, das einstückig mit der Zugstange ist und durch Beigen von Stangenmaterial hergestellt ist und in radialer Richtung nur so groß ist, daß es noch durch die von der Einziehung 5 gebildete Öffnung paßt. Am oberen Ende trägt die Zugstange 13 eine Mutter 15, statt der auch ein mit der Zugstange einstückiges Widerlager vorgesehen sein kann.

Im Bereich der Einziehung 5 ist im Behälterrohr 1 ein Innendeckel 16 vorgesehen, der sich aus dem Behälterrohr herauswölbt und an der Einziehung von innen mit einem umlaufenden Randstreifen anliegt. Dieser Randstreifen geht nach außen hin in einen schmalen Führungsring 17 über, der an der Wandung des Behälterrohres 1 von innen anliegt. In den Innendeckel 16 ist im Bereich des Führungsringes 17 eine metallene Scheibe 18 eingelegt, die an dem umlaufenden Randstreifen des Innendeckels anliegt und zur Mitte hin etwas zur Manschette hin vorragt. In dem herausgewölbten Bereich des Innendeckels 16 ist eine Öffnung 19 vorgesehen, durch welche eine Lasche ragt, die in einem Klemmstück 20 eine nicht gezeigte Bohrung besitzt, durch welche die Zugstange 13 ragt. Die Lasche besitzt außerhalb des Innendeckels 16 ein zum Griffstück 14 hin umgebogenes Betätigungsstück 21 und stellt eine Klemmeinrichtung dar, mit welcher die Zugstange gegenüber dem Innendeckel in jeder Stellung festgestellt werden kann. Eine wendelförmige Druckfeder 22 erstreckt sich von der Scheibe 18 des Innendeckels 16 bis zur Scheibe 11 der Druckmanschette 9, verjüngt sich zur Manschette hin im Durchmesser und ist in radialer Richtung einerseits durch die vorragende Gestaltung der Scheibe 18 und andererseits durch den Hals 12 geführt.

Fig. 4 zeigt im Schnitt eine Druckmanschette 23, die anders ausgebildet ist als die in Fig. 3 gezeigte Druckmanschette 9, aber auch in die Fettpresse gemäß Fig. 1 eingebaut werden kann. Die aus Gummi bestehende Manschette 23 besitzt eine axial verlaufende Bohrung 24, durch welche die Zugstange 13 gesteckt wird. Die Manschette besitzt einen nach unten ragenden halsartigen Ansatz 25, an dem ein nach oben hin offenes Tellergebilde 26 sitzt, dessen Außenabmessungen sich nach oben hin konisch verjüngen. Auch die Manschette 23 ist in radialer Richtung etwas elastisch komprimierbar.

**Patentansprüche**

1. Fettpresse mit einem Behälterrohr (1) an dessen einem Ende ein Aufsatz (3) mit Pumpe (4) sitzt und an dessen anderem Ende ein in Achsrichtung verschiebbarer, einen äußeren Führungsring (17) aufweisender Innendeckel (16) eingesetzt ist, an dem eine Zugstange (13) axial verschiebbar und mittels Feststelleinrichtung (20, 21) feststellbar geführt ist, die im Behälterrohr eine auf ihr verschiebbare Druckmanschette (9), zwischen dieser und dem Innendeckel (16) eine Druckfeder (22) und außerhalb des Behälterrohres ein Griffstück (14) trägt, dadurch gekennzeichnet, daß am aufsatzseitigen Ende des Behälterrohres (1) eine verschließbare enge Luftauslaßöffnung (8) vorgesehen ist und die Feststelleinrichtung als Klemmeinrichtung (20, 21) mit über eine Betätigungslasche (21) bedienbarem, mit der Zugstange (13) zusammenwirkenden Klemmstück (20) ausgebildet ist.

2. Fettpresse nach Anspruch 1, bei welcher das Behälterrohr (1) in den Aufsatz (3) gegen einen Dichtungsring geschraubt ist, dadurch gekennzeichnet, daß in den Gewinde (2) eine in Achsrichtung verlaufende Nut vorgesehen ist.

3. Fettpresse nach Anspruch 1 oder 2, dadurch gekennzeichnet, daß die Betätigungslasche (21) der Klemmeinrichtung in radialer Richtung innerhalb des Umfanges der Öffnung des behälterrohres (1) liegt und in Achsrichtung umgebogen ist.

4. Fettpresse nach Anspruch 1, 2 oder 3, dadurch gekennzeichnet, daß die Breite des Führungsringes (17) verringert ist, indem das Verhältnis Außendurchmesser des Innendeckels (16) zu Breite des Führungsringes (17) von 6,5 bis 8,5, insbesondere 7 bis 8 und vorzugsweise ca. 7,4 beträgt.

5. Fettpresse nach einem der vorhergehenden Ansprüche, wobei der Innendeckel (16) aus dem Behälterrohr (1) herausgewölbt ist, dadurch gekennzeichnet, daß in den Innendeckel (16) innerhalb des Führungsringes (17) eine Scheibe (18) eingelegt ist, an der die Druckfeder angreift.

6. Fettpresse nach einem der vorhergehenden Ansprüche, dadurch gekennzeichnet, daß die Druckfeder (22) eine sich vom Innendeckel (16) zur Druckmanschette (9) hin konisch verjüngende Wendel ist.

7. Fettpresse nach einem der vorhergehenden Ansprüche, dadurch gekennzeichnet, daß die Druckmanschette (9) zum Innendeckel (16) hin einen die Zugstange (13) eng umschließenden Ansatz (10) bildet.

8. Fettpresse nach Anspruch 7, bei der eine die Anlage der Druckfeder bildende Scheibe an der Druckmanschette anliegt, dadurch gekennzeichnet, daß die Scheibe (11) einen den Ansatz (10) umschließenden Hals (12) aufweist.

9. Fettpresse nach einem der vorhergehenden Ansprüche, dadurch gekennzeichnet, daß die Breite des Griffstückes (14) in radialer Richtung innerhalb des Umfanges der Öffnung des Behälterrohres (1) liegt.

## Claims

1. Grease gun with a container tube (1) at one end of which there is a head cap (3) with a pump (4) and at the other end of which there is inserted a rear end cap (16) which is displaceable in the axial direction and which comprises an outer guide ring (17) and on which a plunger rod (13) is guided so as to be axially displaceable and locked by means of a locking device (20, 21) which supports, in the container tube, a plunger (9) which can be displaced thereon, a pressure spring (22) between the latter and the rear end cap (16) and a handle (14) outside the container tube, characterised in that there is provided on the head cap end of the container tube (1) a closable narrow air outlet opening (8) and the locking device is formed as a clamping device (20, 21) with a clamping member (20) which is operable via an operating flap (21) and cooperates with the plunger rod (13).

2. Grease gun according to claim 1, in which the container tube (1) is screwed into the head cap (3) against a sealing ring, characterised in that an axially extending groove is provided in the thread (2).

3. Grease gun according to claim 1 or 2, characterised in that the operating flap (21) of the clamping device lies in the radial direction within the circumference of the opening of the container tube (1) and is bent in the axial direction.

4. Grease gun according to claim 1, 2 or 3, characterised in that the width of the guide ring (17) is reduced, while the ratio of the outer diameter of the rear end cap (16) to the width of the guide ring (17) amounts to between 6.5 and 8.5, in particular 7 to 8 and preferably approximately 7.4.

5. Grease gun according to any one of the preceding claims, wherein the rear end cap (16) is curved out from the container tube (1), characterised in that in the rear end cap (16) inside the guide ring (17) a disc (18) is inserted, upon which the pressure spring acts.

6. Grease gun according to any one of the preceding claims, characterised in that the pressure spring (22) is a coil which tapers conically from the rear end cap (16) to the plunger (9).

7. Grease gun according to any one of the preceding claims, characterised in that the plunger (9) forms, towards the rear end cap (16), an attachment (10) which closely surrounds the plunger rod (13).

8. Grease gun according to claim 7, in which a disc, which forms the abutment surface of the pressure spring, abuts on the plunger, characterised in that the disc (11) comprises a collar (12) which surrounds the attachment (10).

9. Grease gun according to any of the preceding claims, characterised in that the width of the handle (14) in the radial direction lies within the circumference of the opening of the container tube (1).

## Revendications

1. Pompe à graisse avec un tube réservoir (1) dont une extrémité supporte un chapeau (3) avec pompe (4) et dont l'autre extrémité est munie d'un couvercle intérieur (16) qui est mobile axialement, qui est muni d'une bague de guidage extérieure (17) et le long duquel peut se déplacer axialement une tige de traction (13) qui peut être fixée avec un dispositif de blocage (20, 21), la tige (13) portant dans le tube (1) une garniture mobile à pression et, entre celle-ci et le couvercle intérieur (16), un ressort de compression (22) et, à l'extérieur du tube, une poignée (14), caractérisée en ce qu'on a prévu à l'extrémité du tube (1) une ouverture étroite obturable (8) de sortie d'air, et en ce que le dispositif de blocage est un dispositif de serrage (20, 21) avec une pièce de serrage (20) coopérant avec la tige de traction (13) et actionnée par une barrette de manoeuvre (21).

2. Pompe selon la revendication 1, dans laquelle le tube réservoir (1) est vissé dans le chapeau (3) contre une bague d'étanchéité, caractérisée en ce qu'on a prévu dans le pas de vis (2) une rainure courant dans le sens axial.

3. Pompe selon l'une quelconque des revendications 1 ou 2, caractérisée en ce que la barrette de manoeuvre (21) du dispositif de serrage se trouve, dans le sens radial, à l'intérieur du pourtour de l'ouverture du tube (1), et en ce qu'elle est coudée dans le sens axial.

4. Pompe selon l'une quelconque des revendications 1, 2 ou 3, caractérisé en ce que la largeur de la bague de guidage (17) est réduite, le rapport entre le diamètre extérieur du couvercle intérieur (16) et la largeur de la bague de guidage (17) étant de 6,5 à 8,5, notamment de 7 à 8 et de préférence d'environ 7,4.

5. Pompe selon l'une quelconque des revendications précédentes, dans laquelle le couvercle intérieur (16) est voûté vers l'extérieur du tube (1), caractérisée en ce qu'on a introduit dans le couvercle intérieur (16), à l'intérieur de la bague de guidage (17), une rondelle (18) à laquelle s'appuie le ressort de compression.

6. Pompe selon l'une quelconque des revendications précédentes, caractérisé en ce que le ressort de compression (22) est un hélice se réduisant en cône entre le couvercle intérieur (16) et la garniture (9).

7. Pompe selon l'une quelconque des revendications précédentes, caractérisé en ce que la garniture (9) constitue en direction du couvercle intérieur (16) un prolongement (10) entourant étroitement la tige de traction (13).

8. Pompe selon la revendication 7, dans laquelle une rondelle formant la butée du ressort s'appuie à la garniture, caractérisée en ce que la rondelle (11) comporte un col (12) entourant le prolongement (10).

9. Pompe selon l'une quelconque des revendications précédentes, caractérisée en ce que la largeur de la poignée (14) setrouve, dans le sens radial, à l'intérieur du pourtour de l'ouverture du tube (1).

0 004 663

Fig. 2

Fig. 3

Fig. 4

Fig. 1

1